# EUROPEAN PATENT APPLICATION

(11) **EP 4 679 071 A1**
(43) Date of publication of application: **14.01.2026**
(21) Application number: 23926286.8
(22) Date of filing: 08.03.2023
(51) Int. Cl.: G01N 27/04

(54) **PROCESSING METHOD, PROCESSING DEVICE, AND PROCESSING PROGRAM RELATED TO ELECTROCHEMICAL CELL**

(71) Applicant: Kabushiki Kaisha Toshiba, Tokyo 105-0023 (JP)
(72) Inventor: FUKAYA, Taro, Tokyo 105-0023 (JP); KONDO, Asato, Tokyo 105-0023 (JP); KANAI, Yuta, Tokyo 105-0023 (JP); YAGI, Ryosuke, Tokyo 105-0023 (JP); SUGANO, Yoshitsune, Tokyo 105-0023 (JP); YOSHINAGA, Norihiro, Tokyo 105-0023 (JP)
(74) Representative: Marks & Clerk LLP
(86) International application number: PCT/JP2023/008789
(87) International publication number: WO 2024/185073

(57) **Abstract**

In an embodiment, a processing method related to an electrochemical cell, in which at least one of an anode and a cathode includes a catalyst, is provided. In the processing method, whether or not a target electrochemical cell can be reused as it is is determined based on a sum of a cell membrane resistance caused by a membrane and a cell catalyst resistance caused by a catalyst. In the processing method, whether or not the target electrochemical cell can be regenerated without separating the anode and the cathode is determined based on the cell catalyst resistance when it is determined that the target electrochemical cell cannot be reused as it is.

## Description

### FIELD

Embodiment of the present invention relates to a processing method, a processing apparatus, and a processing program related to an electrochemical cell.

### BACKGROUND

An electrochemical cell is used in which an electrochemical reaction occurs by input of power, or power generated by the electrochemical reaction is output. In an electrochemical cell to which power is input, for example, electrolysis of water or the like occurs as an electrochemical reaction by the input of power, and a product by the electrochemical reaction such as hydrogen is recovered. In addition, in an electrochemical cell that outputs power, power is generated by an electrochemical reaction by being supplied with fuel such as hydrogen and oxygen, and the generated power is supplied.

After the electrochemical cell is used, the used electrochemical cell is reused (reused) or recycled. At this time, whether to reuse or recycle the electrochemical cell is determined based on the state of the electrochemical cell including the deterioration state. For example, an electrochemical cell with a low degree of degradation is reused. For an electrochemical cell with a high degree of deterioration, an element, a compound of an element, or the like contained in the catalyst is recovered by, for example, decomposing the catalyst contained in at least one of the anode and the cathode after separating the anode and the cathode. Then, for example, the recovered elements and the like are combined to regenerate the catalyst, and the electrochemical cell is recycled.

Here, depending on the state of the used electrochemical cell or the like, the electrochemical cell may be reusable by regenerating the electrochemical cell without separating the anode and the cathode. For this reason, in the determination on reuse and recycling of the electrochemical cell, it is required to appropriately determine whether or not the electrochemical cell can be regenerated without separating the anode and the cathode. In addition, it is required to enable effective reuse of an electrochemical cell in accordance with a state of the electrochemical cell by appropriately determining whether or not the electrochemical cell can be regenerated without separating an anode and a cathode.

### CITATION LIST

### PATENT LITERATURE

Patent Literature 1: Jpn. Pat. Appln. KOKAI Publication No. 2022-45497
Patent Literature 2: Jpn. Pat. Appln. KOKAI Publication No. 2014-171335
Patent Literature 3: Jpn. Pat. Appln. KOKAI Publication No. 2014-126532
Patent Literature 4: Jpn. Pat. Appln. KOKAI Publication No. 2017-106889

### SUMMARY

### TECHNICAL PROBLEM

An object of the present invention is to provide a processing method, a processing apparatus, and a processing program related to an electrochemical cell that enable effective reuse of the electrochemical cell in accordance with a state of the electrochemical cell in determination of reuse and recycling of the electrochemical cell.

### SOLUTION TO PROBLEM

According to an embodiment, a processing method related to an electrochemical cell, in which at least one of an anode and a cathode includes a catalyst and an electrochemical reaction occurs by an input of power or power generated by an electrochemical reaction is output, is provided. In the processing method, whether or not a target electrochemical cell can be reused as it is is determined based on a sum of a cell membrane resistance caused by a membrane and a cell catalyst resistance caused by a catalyst. In the processing method, whether or not the target electrochemical cell can be regenerated without separating the anode and the cathode is determined based on the cell catalyst resistance when it is determined that the target electrochemical cell cannot be reused as it is.

### BRIEF DESCRIPTION OF THE DRAWINGS

FIG. 1 is a block diagram schematically illustrating an example of a processing system according to an embodiment.
FIG. 2 is a flowchart schematically illustrating an example of diagnostic processing performed by a processing circuit or the like of a processing apparatus executing a diagnosis program in the embodiment.
FIG. 3 is a schematic diagram illustrating an example of processing of estimating cell membrane resistance and cell catalyst resistance for an electrochemical cell in the embodiment.
FIG. 4 is a schematic diagram illustrating an example of processing of estimating an anode catalyst resistance and a cathode catalyst resistance for an electrochemical cell in a case where both an anode and a cathode of the electrochemical cell include a catalyst in the embodiment.
FIG. 5 is a flowchart schematically illustrating an example of determination processing performed by a processing circuit or the like of a processing apparatus executing a determination program in the embodiment.
FIG. 6 is a flowchart schematically showing an example of determination processing for a single electrochemical cell in FIG. 5.
FIG. 7 is a flowchart schematically showing an example of determination processing for a catalyst of FIG. 6.

### DETAILED DESCRIPTION

Hereinafter, an embodiment will be described with reference to the drawings.

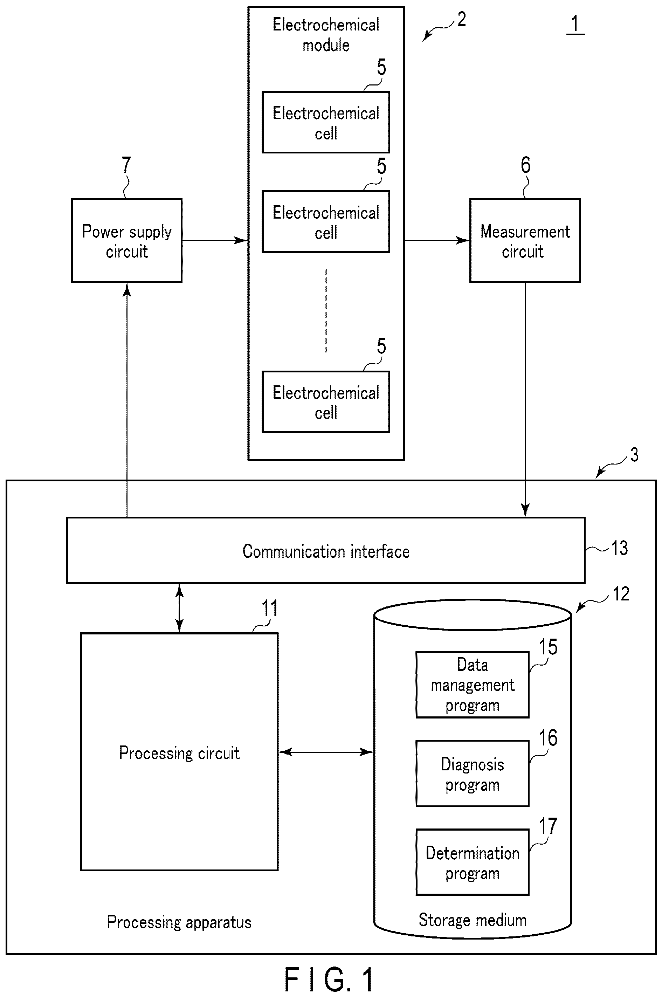

FIG. 1 is a block diagram illustrating an example of a processing system 1 according to an embodiment. In the example of FIG. 1, the processing system 1 includes an electrochemical module (target electrochemical module) 2 to be processed and a processing apparatus 3. The electrochemical module 2 is used for a predetermined use or a predetermined device. In an example, the electrochemical module 2 can be connected to a power system (not shown), and when the electrochemical module 2 is in use, power is input from the power system to the electrochemical module 2, or power is output from the electrochemical module 2 to the power system.

The electrochemical module 2 includes an electrochemical cell 5, and in the example of FIG. 1, the electrochemical module 2 is provided with a plurality of electrochemical cells 5. When the electrochemical module 2 includes a plurality of electrochemical cells 5, in the electrochemical module 2, the plurality of electrochemical cells 5 are electrically connected to each other. In this case, in each of the electrochemical modules 2, a plurality of electrochemical cells may be electrically connected in series, or a plurality of electrochemical cells may be electrically connected in parallel. In each of the electrochemical modules 2, both a structure in which a plurality of electrochemical cells are electrically connected in series and a structure in which a plurality of electrochemical cells are electrically connected in parallel may be formed.

In the electrochemical module 2, each of the electrochemical cells 5 includes an anode and a cathode. In each of the electrochemical cells 5, a membrane such as an ion exchange membrane or an electrolyte membrane is interposed between the anode and the cathode. In each of the electrochemical cells 5, at least one of the anode and the cathode includes a catalyst. In each of the electrochemical cells 5, only one of the anode and the cathode may include the catalyst, and both the anode and the cathode may include the catalysts. In each of the electrochemical cells 5, an electrode group is constituted by an anode, a cathode, and a membrane.

In the configuration in which power is input to electrochemical module 2, power such as DC power is input to the electrochemical module 2, whereby power is input to each of electrochemical cells 5. In each of the electrochemical cells 5, an electrochemical reaction occurs by input of power. In this case, the product generated by the electrochemical reaction in each of the electrochemical cells 5 of the electrochemical module 2 is recovered.

In an example, the electrochemical module 2 includes a water electrolysis cell as the electrochemical cell 5. Water is supplied to the electrochemical module 2 to be the water electrolysis module. In this case, in each of the electrochemical cells 5 of the electrochemical module 2, hydrogen ions and oxygen are generated in the anode by input of power. In each of the electrochemical cells 5, when power is input, hydrogen ions generated at the anode move to the cathode side through the membrane, and hydrogen is generated at the cathode. In this example, as described above, in each of the electrochemical cells 5 of the electrochemical module 2, electrolysis of water occurs as an electrochemical reaction due to input of power. Hydrogen, which is a product obtained by electrolysis of water, is recovered.

In an example, the electrochemical module 2includes a power to chemicals (P2C) cell as the electrochemical cell 5. In the electrochemical module 2, water is supplied to the anode of each of the P2C cells which are electrochemical cells 5, and carbon dioxide is supplied to the cathode of each of the P2C cells. In each of the electrochemical cells 5 of the electrochemical module 2, when power is input, oxygen is generated from water at the anode, and carbon monoxide is generated from carbon dioxide at the cathode. In this example, as described above, in each of the electrochemical cells 5 of the electrochemical module 2, the electrolysis of water and carbon dioxide occurs as an electrochemical reaction by the input of power. Then, oxygen which is a product obtained by electrolysis of water and carbon monoxide which is a product obtained by electrolysis of carbon dioxide are recovered.

In the configuration in which power is output from the electrochemical module 2, power is generated by an electrochemical reaction in each of the electrochemical cells 5. Then, power such as DC power generated by an electrochemical reaction in each of the electrochemical cells 5 is output from the electrochemical module 2.

In an example, the electrochemical module 2 includes a fuel battery cell as the electrochemical cell 5. In each of the electrochemical cells 5 of the electrochemical module 2, fuel such as hydrogen is supplied to the anode, and oxygen is supplied to the cathode. In each of the electrochemical cells 5, an electrochemical reaction occurs by supply of fuel and oxygen, a current is output from a cathode (positive electrode), and a current is input to an anode (negative electrode). Accordingly, power is generated in each of the electrochemical cells 5. In this example, as described above, when oxygen and fuel are supplied to the electrochemical module 2, power is generated in each of the electrochemical cells 5, and the generated power is output from the electrochemical module 2.

In the example of FIG. 1, the processing system 1 includes a measurement circuit 6. The measurement circuit 6 measures parameters related to the electrochemical module 2 to be processed and the electrochemical cell 5 constituting the electrochemical module 2. The measurement circuit 6 includes an ammeter and a voltmeter. The measurement circuit 6 measures, as parameters related to the electrochemical module 2 and the electrochemical cell 5, at least one of a current in the whole electrochemical module 2 and a current flowing through each of the electrochemical cells 5 constituting the electrochemical module 2. The measurement circuit 6 measures at least one of a voltage applied to the whole electrochemical module 2 and a voltage applied to each of the electrochemical cells 5 constituting the electrochemical module 2 as a parameter related to the electrochemical module 2 and the electrochemical cell 5.

In an example, in the electrochemical module 2, a plurality of electrochemical cells 5 are electrically connected in series. The measurement circuit 6 measures the current in the whole electrochemical module 2, and measures the voltage of each of the plurality of electrochemical cells 5 constituting the electrochemical module 2. In another example, a plurality of electrochemical cells 5 are electrically connected in parallel in the electrochemical module 2. The measurement circuit 6 measures the voltage of the whole electrochemical module 2, and measures the current of each of the plurality of electrochemical cells 5 constituting the electrochemical module 2. In an example, the measurement circuit 6 may include a temperature sensor or the like, and measure one of the temperature of the electrochemical module 2 and the temperature of each of the plurality of electrochemical cells 5 constituting the electrochemical module 2.

The processing system 1 includes a power supply circuit 7 for diagnosis. The power supply circuit 7 is used in diagnosis of the electrochemical module 2 and the like described later. The power supply circuit 7 can output a current signal for diagnosis to be described later.

The processing apparatus 3 performs processing related to the electrochemical module 2 and the plurality of electrochemical cells 5 constituting the electrochemical module 2. In an example, the processing apparatus 3 is constituted of a computer such as a server, and includes a processing circuit 11 and a storage medium 12. The processing circuit 11 includes a processor, an integrated circuit, or the like, and the processor or the like constituting the processing circuit 11 includes any of a central processing unit (CPU), an application specific integrated circuit (ASIC), a microcomputer, a field programmable gate array (FPGA), a digital signal processor (DSP), and the like. The processing circuit 11 may include a processor or the like, or may include a plurality of processors or the like. Furthermore, the storage medium 12 may be a main storage apparatus such as a memory, or may be an auxiliary storage apparatus. In the processing apparatus 3, only one storage medium 12 may be provided, or a plurality of storage media may be provided.

In the processing apparatus 3, the processing circuit 11 performs processing by executing a program or the like stored in the storage medium 12. Furthermore, the storage medium 12 stores data and the like used for processing in the processing circuit 11. In an example, in the processing apparatus 3, the program executed by the processing circuit 11 may be stored in a computer (server) connected via a network such as the Internet, a server in a cloud environment, or the like. In this case, the processing circuit 11 downloads the program via the network.

In the example of FIG. 1, the storage medium 12 stores a data management program 15, a diagnosis program 16, and a determination program 17 as programs to be executed by the processing circuit 11. The processing circuit 11 executes the data management program 15 to write data to the storage medium 12 and read data from the storage medium 12. The processing circuit 11 executes the diagnosis program 16 to perform diagnostic processing described later on the electrochemical module 2 and a plurality of electrochemical cells 5 constituting the electrochemical module 2. The processing circuit 11 executes the determination program 17 to perform determination processing described later on the electrochemical module 2 and a plurality of electrochemical cells 5 constituting the electrochemical module 2.

Note that, in an example, the processing apparatus 3 is constituted of a plurality of computers such as a plurality of servers, and processors of the plurality of computers cooperate to perform diagnostic processing, determination processing, and the like described later. In this case, for example, a certain one of a plurality of computers performs diagnostic processing to be described later, and another one of the plurality of computers that performs diagnostic processing performs determination processing to be described later. In a case where the processing apparatus 3 is constituted of a plurality of computers, the plurality of computers constituting the processing apparatus 3 can communicate with each other wirelessly or by wire.

In another example, at least a part of the processing apparatus 3 is configured from a cloud server in a cloud environment. The infrastructure of the cloud environment includes a virtual processor such as a virtual CPU and a cloud memory. In a case where at least a part of the processing apparatus 3 is constituted of a cloud server, a virtual processor performs at least a part of diagnostic processing, determination processing, and the like described later. In addition, a program executed by the virtual processor, data used for processing in the virtual processor, and the like are stored in the cloud memory.

In addition, the processing apparatus 3 includes a communication interface 13. The processing circuit 11 communicates with a device or the like outside the processing apparatus 3 via the communication interface 13. Communication via the communication interface 13 is performed wirelessly or by wire. The processing circuit 11 or the like of the processing apparatus 3 receives information indicating measurement results of parameters related to the electrochemical module 2 and the electrochemical cell 5 from the measurement circuit 6 via the communication interface 13. In addition, the processing circuit 11 or the like transmits a command related to drive control of the power supply circuit 7 to a power supply apparatus (not illustrated) or the like on which the power supply circuit 7 is mounted via the communication interface 13.

Furthermore, in an example, the processing apparatus 3 may be provided with a user interface (not illustrated). In this case, in the user interface, various operations including operations related to the electrochemical module 2 and the electrochemical cell 5 are input by the user of the processing apparatus 3, the processing system 1, and the like. Therefore, in the user interface, any of a button, a mouse, a touch panel, a keyboard, and the like is provided as an operation unit to which an operation is input by the user or the like. In addition, the user interface is provided with a notifier that notifies information related to the electrochemical module 2 and the electrochemical cell 5. The notifier notifies information by any of screen display, transmission of sound, and the like. Note that the user interface may be provided separately from the computer or the like constituting the processing apparatus 3.

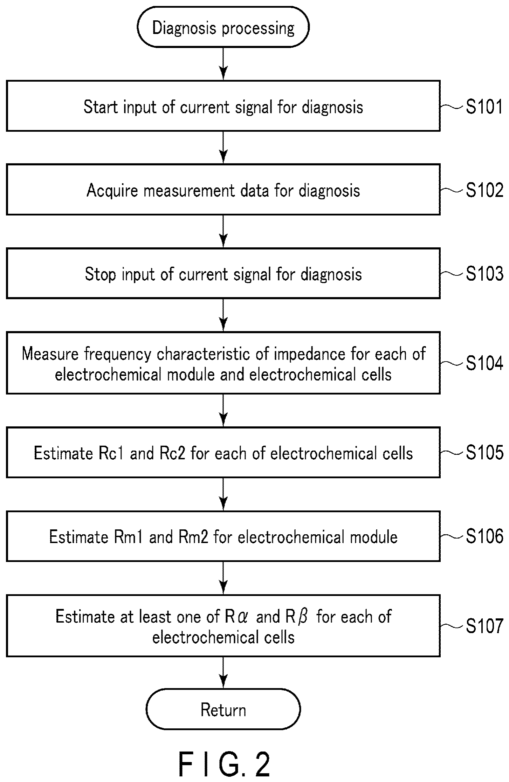

In the present embodiment, when the electrochemical module 2 including the plurality of electrochemical cells 5 is used, each of the electrochemical module 2 and the electrochemical cell 5 is periodically diagnosed. The electrochemical module 2 and the electrochemical cell 5 are diagnosed by the processing circuit 11 or the like executing the diagnosis program 16. FIG. 2 is a flowchart illustrating an example of diagnostic processing performed by the processing circuit 11 or the like by executing the diagnosis program 16. The processing in the example of FIG. 2 is periodically performed when the electrochemical module 2 is used. The processing in the example of FIG. 2 is performed in a state in which the temperatures of the electrochemical module 2 and the electrochemical cell 5, that is, the environmental temperatures of the environment in which the electrochemical module 2 is disposed fall within a prescribed temperature range. The prescribed temperature range is, for example, 15°C or higher and 90°C or lower, and preferably 50°C or higher and 80°C or lower.

When the processing of the example of FIG. 2 is started, the processing circuit 11 or the like controls the driving of the power supply circuit 7 for diagnosis or the like to start the input of the current signal for diagnosis to the electrochemical module 2 (S101). Accordingly, a current signal for diagnosis is input to the electrochemical module 2 and each of the electrochemical cell 5 constituting the electrochemical module 2. In an example, a pseudo random pulse signal such as an M-sequence signal is input to the electrochemical module 2 as a current signal for diagnosis. The pseudo random pulse signal input to the electrochemical module 2 includes a plurality of types of pulses having different pulse widths from each other.

In another example, as a current signal for diagnosis, AC current in which current value periodically changes is input to the electrochemical module 2. In this case, AC current is input to the electrochemical module 2 in any waveform such as a sine wave, a triangular wave, or a sawtooth wave. In the present example, the processing circuit 11 or the like can adjust the frequency of AC current input to the electrochemical module 2 by controlling the driving of the power supply circuit 7 for diagnosis. Then, the processing circuit 11 or the like inputs AC current to be a current signal for diagnosis to the electrochemical module 2 in a state where AC current changes to a plurality of frequencies with time.

Then, in a state where a current signal for diagnosis is input to the electrochemical module 2, the processing circuit 11 or the like causes the measurement circuit 6 to measure parameters related to the electrochemical module 2 and the electrochemical cell 5, and acquires measurement data for diagnosis (S102). The measurement data for diagnosis is generated based on a measurement result by the measurement circuit 6 in a state where a current signal for diagnosis is input to the electrochemical module 2. In the measurement data for diagnosis, a time change (time history) or the like in a state where a current signal for diagnosis is input to the electrochemical module 2 is indicated for the current of the electrochemical module 2 and the current of each of the electrochemical cells 5. In the measurement data for diagnosis, for the voltage of the electrochemical module 2 and the voltage of each of the electrochemical cells 5, a time change (time history) and the like in a state where a current signal for diagnosis is input to the electrochemical module 2 are shown.

Incidentally, a current signal for diagnosis may be input to the electrochemical module 2 in a state where an electrochemical reaction occurs in the electrochemical module 2 by input of power or in a state where power generated by an electrochemical reaction is output from the electrochemical module 2. In this case, a current signal for diagnosis is superimposed on a current input to the electrochemical module 2 for causing an electrochemical reaction to occur or a current output from the electrochemical module 2 due to occurrence of an electrochemical reaction. Therefore, measurement of measurement data for diagnosis is performed in parallel with the operation of the electrochemical module 2.

When the measurement in a state where the current signal for diagnosis is input to the electrochemical module 2 is completed and the processing circuit 11 or the like acquires measurement data for diagnosis, the processing circuit 11 or the like stops the input of the current signal for diagnosis to the electrochemical module 2 by controlling the driving of the power supply circuit 7 for diagnosis or the like (S103). Accordingly, a current signal for diagnosis is not input to each of the electrochemical module 2 and the electrochemical cells 5 constituting the electrochemical module 2.

Then, the processing circuit 11 or the like measures frequency characteristics of impedance for the electrochemical module 2 and each of the electrochemical cells 5 constituting the electrochemical module 2 by analyzing the measurement data for diagnosis (S104). Here, processing of measuring a frequency characteristic of impedance for an electrochemical cell 5 will be described.

In the measurement of the frequency characteristic of the impedance of the electrochemical cell 5, current time-series data indicating a time change of the current of the electrochemical cell 5 in a state where a current signal for diagnosis is input to the electrochemical module 2 is Fourier-transformed to generate current spectrum data indicating the frequency characteristic of the current of the electrochemical cell 5. Then, voltage time-series data indicating the time change of the voltage of the electrochemical cell 5 in a state where the current signal for diagnosis is input to the electrochemical module 2 is Fourier-transformed to generate voltage spectrum data indicating the frequency characteristic of the voltage of the electrochemical cell 5.

Then, calculation is performed using the current spectrum data and the voltage spectrum data of the electrochemical cell 5, and impedance spectrum data indicating the frequency characteristic of the impedance of the electrochemical cell 5 is calculated. The impedance spectrum data of the electrochemical cell 5 is calculated, for example, by dividing voltage spectrum data of the electrochemical cell 5 by current spectrum data of the electrochemical cell 5. The impedance spectrum data of the electrochemical cell 5 shows the impedance of the electrochemical cell 5 at each of the plurality of frequencies.

Patent Literature 3 (Jpn. Pat. Appln. KOKAI Publication No. 2014-126532) discloses a method for calculating the frequency characteristic of the impedance of the battery using the current time-series data on the current of the battery and the voltage time-series data on the voltage of the battery. In the embodiment and the like, the frequency characteristic of the impedance of the electrochemical cell 5 may be calculated in the same manner as the calculation of the frequency characteristic of the impedance of the battery in Patent Literature 3. In this case, the processing circuit 11 or the like calculates an autocorrelation function of the current spectrum data of the electrochemical cell 5, and calculates a cross-correlation function between the current spectrum data and the voltage spectrum data of the electrochemical cell 5. Then, the processing circuit 11 or the like calculates the frequency characteristic of the impedance of the electrochemical cell 5 using the calculated autocorrelation function and cross-correlation function.

In the case where AC current is input to the electrochemical module 2 at a plurality of frequencies as the current signal for diagnosis, the processing circuit 11 or the like calculates the impedance of the electrochemical cell 5 based on the current value and the voltage value of the electrochemical cell 5 indicated by the measurement data and the like for each of the plurality of frequencies. At this time, for example, the impedance of the electrochemical cell 5 is calculated by dividing the voltage value of the electrochemical cell 5 by the current value for each of the plurality of frequencies. As a result, the frequency characteristic of the impedance of the electrochemical cell 5 showing the impedance of the electrochemical cell 5 at each of the plurality of frequencies is calculated.

Also for other electrochemical cells 5 constituting the electrochemical module 2, the frequency characteristic of the impedance of the electrochemical cell 5 is measured in the same manner as any of the methods described above. Also for the electrochemical module 2, the frequency characteristic of the impedance is measured using the current time-series data indicating the time change in the current of the electrochemical module 2 in a state where the current signal for diagnosis is input to the electrochemical module 2 and the voltage time-series data indicating the time change in the voltage of the electrochemical module 2 in a state where the current signal for diagnosis is input to the electrochemical module 2. In this case, the frequency characteristic of the impedance of the electrochemical module 2 is calculated in the same manner as the frequency characteristic of the impedance of the electrochemical cell 5. That is, the frequency characteristic of the impedance of the electrochemical module 2 is measured in the same manner as any of the methods described above.

Then, for each of the electrochemical cells 5, the processing circuit 11 or the like estimates a cell membrane resistance Rc1, which is a resistance component caused by a membrane such as an ion-exchange membrane, and a cell catalyst resistance Rc2, which is a resistance component caused by a catalyst (S105). Also for the electrochemical module 2, the processing circuit 11 or the like estimates a module membrane resistance Rm1, which is a resistance component caused by the membrane, and a module catalyst resistance Rm2, which is a resistance component caused by the catalyst (S106). For each of the electrochemical cells 5, the cell membrane resistance Rc1 and the cell catalyst resistance Rc2 are calculated based on the measurement result for the frequency characteristic of the impedance. Also for the electrochemical module 2, the module membrane resistance Rm1 and the module catalyst resistance Rm2 are calculated based on the measurement result for the frequency characteristic of the impedance.

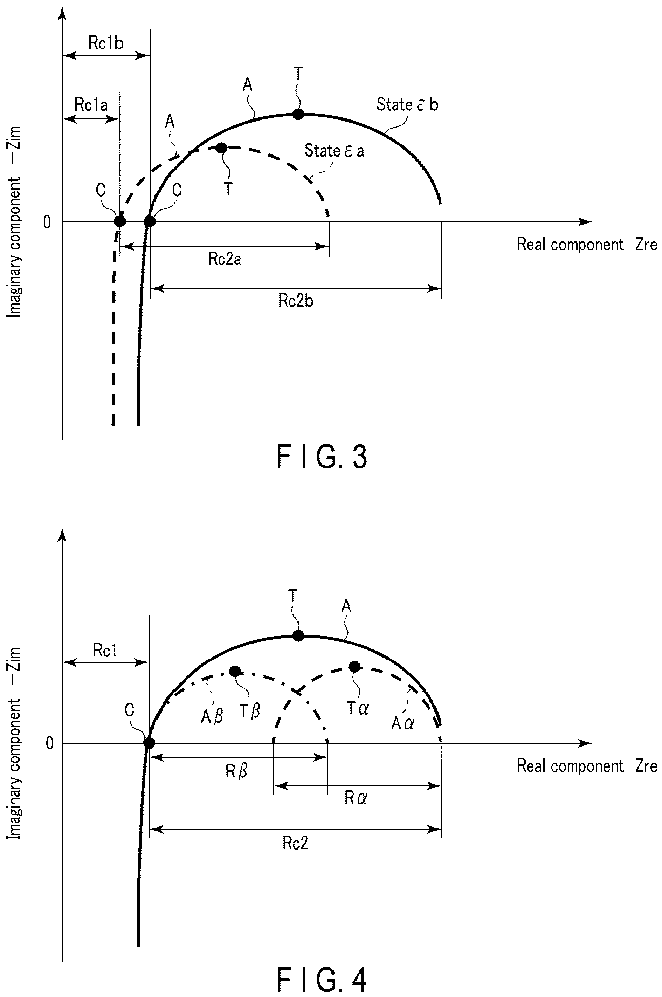

FIG. 3 illustrates an example of processing for estimating the cell membrane resistance Rc1 and the cell catalyst resistance Rc2 for an electrochemical cell 5. In FIG. 3, a complex impedance plot (Cole-Cole plot) is shown. As illustrated in FIG. 3, in the complex impedance plot, the abscissa axis represents a real component Zre of the impedance, and the ordinate axis represents an imaginary component -Zim of the impedance. In the example of FIG. 3, for the electrochemical cell 5, the frequency characteristic of the impedance in a state εa is indicated by a broken line, and the frequency characteristic of the impedance in a state εb different from the state εa is indicated by a solid line.

As shown in FIG. 3, in the complex impedance plot showing the frequency characteristic of the impedance of the electrochemical cell 5, an arc portion A convex to the negative side of the imaginary component of the impedance is formed. The arc portion A has a vertex T of a convex shape, and the imaginary component of the impedance has a negative value at the vertex T of the convex shape. In addition, in the complex impedance plot, there is an intersection C intersecting the abscissa axis, which is the axis of the real component, on the side where the frequency is higher than the vertex T of the convex shape of the arc portion A. In the example of FIG. 3, the value (positive value) of the real component of the impedance at the intersection C of the complex impedance plot is calculated as the cell membrane resistance Rc1 of the electrochemical cell 5. The diameter of the arc portion A is calculated as the cell catalyst resistance Rc2 of the electrochemical cell 5.

In the example of FIG. 3, for the state εa, the resistance value Rc1a of the cell membrane resistance Rc1 and the resistance value Rc2a of the cell catalyst resistance are shown. For the state εb, the resistance value Rclb of the cell membrane resistance Rc1 and the resistance value Rc2b of the cell catalyst resistance are shown. In the electrochemical cell 5, the higher the degree of deterioration of the membrane, the higher the cell membrane resistance Rc1. In the electrochemical cell 5, the cell catalyst resistance Rc2 increases as the degree of deterioration of the catalyst increases. In the example of FIG. 3, the resistance value Rclb is higher than the resistance value Rc1a, and the resistance value Rc2b is higher than the resistance value Rc2a. Therefore, in the state εb, as compared to the state εa, the degree of deterioration of the membrane of the electrochemical cell 5 is higher and the degree of deterioration of the catalyst of the electrochemical cell 5 is higher. Also for other electrochemical cells 5 constituting the electrochemical module 2, the cell membrane resistance Rc1 and the cell catalyst resistance Rc2 are calculated in the same manner as the method described above.

Also for the electrochemical module 2, the module membrane resistance Rm1 and the module catalyst resistance Rm2 are estimated using a complex impedance plot showing a frequency characteristic of the impedance of the electrochemical module 2. At this time, the module membrane resistance Rm1 is calculated from the complex impedance plot for the electrochemical module 2 in the same manner as the method for calculating the cell membrane resistance Rc1 in the example of FIG. 3. Then, the module catalyst resistance Rm2 is calculated from the complex impedance plot for the electrochemical module 2 in the same manner as the method for calculating the cell catalyst resistance Rc2 in the example of FIG. 3.

In the electrochemical module 2, as the degree of deterioration of the membrane in the electrochemical cell 5 constituting the electrochemical module 2 is higher, the module membrane resistance Rm1 is higher. In the electrochemical module 2, as the degree of deterioration of the catalyst in the electrochemical cell 5 constituting the electrochemical module 2 is higher, the module catalyst resistance Rm2 is higher.

Then, for each of the electrochemical cells 5, the processing circuit 11 or the like estimates at least one of an anode catalyst resistance Rα, which is a resistance component caused by the catalyst of the anode, and a cathode catalyst resistance Rβ, which is a resistance component caused by the catalyst of the cathode (S107). Hereinafter, processing of estimating the anode catalyst resistance Rα and/or cathode catalyst resistance Rβ for an electrochemical cell 5 will be described. In the embodiment and the like, in the diagnostic processing, the anode catalyst resistance Rα and/or cathode catalyst resistance Rβ is estimated also for other electrochemical cells 5 in the same manner as in the following processing.

When only the anode of the electrochemical cell 5 includes the catalyst, the cell catalyst resistance Rc2 estimated in S105 is calculated as the resistance value of the anode catalyst resistance Rα of the electrochemical cell 5. In this case, since the cathode of the electrochemical cell 5 does not include a catalyst, the cathode catalyst resistance Rβ of the electrochemical cell 5 is not estimated. When only the cathode of the electrochemical cell 5 includes the catalyst, the cell catalyst resistance Rc2 estimated in S105 is calculated as the resistance value of the cathode catalyst resistance Rβ of the electrochemical cell 5. In this case, since the anode of the electrochemical cell 5 does not include a catalyst, the anode catalyst resistance Rα of the electrochemical cell 5 is not estimated.

FIG. 4 illustrates an example of processing of estimating an anode catalyst resistance Rα and a cathode catalyst resistance Rβ for an electrochemical cell 5 when both the anode and the cathode of the electrochemical cell 5 include a catalyst. In FIG. 4, a complex impedance plot is shown. In FIG. 4, the frequency characteristic of the impedance of the electrochemical cell 5 is indicated by a solid line.

In one processing of FIG. 4, the arc portion A indicated as the impedance of the electrochemical cell 5 in the complex impedance plot is separated into the impedance of the anode caused by the catalyst or the like of the anode and the impedance of the cathode caused by the catalyst or the like of the cathode. Thus, in the complex impedance plot, the arc portion A indicating the impedance of the electrochemical cell 5 is separated into an arc portion Aα indicating the impedance of the anode and an arc portion Aβ indicating the impedance of the cathode. In FIG. 4, the arc portion Aα indicating the impedance of the anode is indicated by a broken line, and the arc portion Aβ indicating the impedance of the cathode is indicated by an alternate long and short dash line.

The diameter of the arc portion Aα is calculated as the anode catalyst resistance Rα of the electrochemical cell 5, and the diameter of the arc portion Aβ is calculated as the cathode catalyst resistance Rβ of the electrochemical cell 5. Note that the arc portion Aα is convex to the negative side of the imaginary component of the impedance, and the imaginary component of the impedance has a negative value at a vertex Tα of the convex shape of the arc portion Aα. In addition, the arc portion Aβ is convex to the negative side of the imaginary component of the impedance, and the imaginary component of the impedance has a negative value at a vertex Tβ of the convex shape of the arc portion Aβ.

The processing of separating the arc portion A into the arc portions Aα and Aβ is performed using, for example, a measurement result of the frequency characteristic of the impedance of the electrochemical cell 5 such as a complex impedance plot and an equivalent circuit model of the electrochemical cell 5. The equivalent circuit model of the electrochemical cell 5 is stored in the storage medium 12 or the like, and in the equivalent circuit model, circuit parameters (electrical characteristic parameters) including a resistance component in the electrochemical cell 5 are set. The circuit parameters set in the equivalent circuit model include an anode catalyst resistance Rα and a cathode catalyst resistance Rβ. In the equivalent circuit model, the relationship between the set circuit parameter and the impedance of the electrochemical cell 5 is shown, and for example, a relational expression for calculating the impedance of the electrochemical cell 5 using the circuit parameter and the frequency is shown.

In the calculation of the anode catalyst resistance Rα and the cathode catalyst resistance Rβ of the electrochemical cell 5, the processing circuit 11 or the like performs fitting calculation using, for example, the relationship between the circuit parameter and the impedance indicated by the equivalent circuit model and the measurement result of the frequency characteristic of the impedance of the electrochemical cell 5. At this time, fitting calculation is performed using the circuit parameters set in the equivalent circuit model including the anode catalyst resistance Rα and the cathode catalyst resistance Rβ as variables, and a circuit parameter to be a variable is calculated. In addition, in the fitting calculation, the value of the circuit parameter to be a variable is calculated in a state where the difference between the arithmetic value calculated using the relationship indicated by the equivalent circuit model and the measurement value that is the measurement result is as small as possible at each of the plurality of frequencies at which the impedance is measured. By calculating circuit parameters by fitting calculation, the anode catalyst resistance Rα and the cathode catalyst resistance Rβ of the electrochemical cell 5 are calculated.

Patent Literature 4 (Jpn. Pat. Appln. KOKAI Publication No. 2017-106889) discloses a method for performing fitting calculation using a measurement result of a frequency characteristic of impedance of a battery and a relationship between a circuit parameter (circuit constant) indicated by an equivalent circuit model of the battery and the impedance, calculating a value of the circuit parameter set in the equivalent circuit model, and calculating a resistance component of the battery. In the embodiment and the like, the anode catalyst resistance Rα and the cathode catalyst resistance Rβ of the electrochemical cell 5 may be calculated in the same manner as the calculation of the resistance component for the battery in Patent Literature 4.

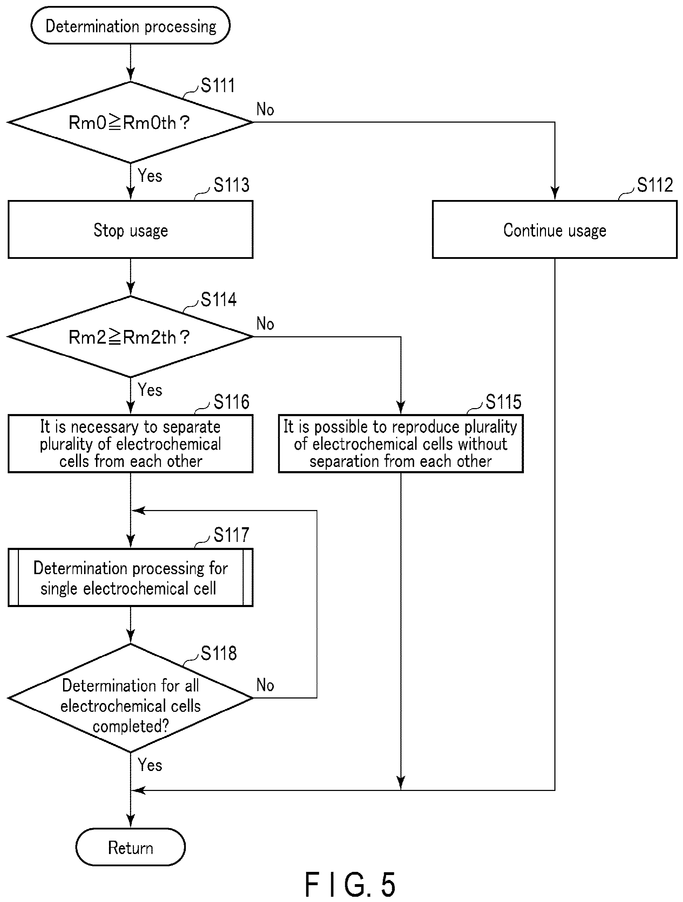

In the present embodiment, the electrochemical module 2 and the electrochemical cell 5 constituting the electrochemical module 2 are determined using the diagnosis result in the diagnosis such as the diagnostic processing of the example of FIG. 2. The electrochemical module 2 and the electrochemical cell 5 are determined by the processing circuit 11 or the like executing the determination program 17. FIG. 5 is a flowchart illustrating an example of determination processing performed by the processing circuit 11 or the like by executing the determination program 17. The processing in the example of FIG. 5 is performed, for example, every time the electrochemical module 2 is newly diagnosed and the diagnosis result is updated.

In the processing of the example of FIG. 5, the estimation result in the diagnostic processing described above is used. That is, in the determination processing, the determination is performed using the estimation results of the module membrane resistance Rm1 and the module catalyst resistance Rm2 of the electrochemical module 2 and the estimation results of the cell membrane resistance Rc1, the cell catalyst resistance Rc2, the anode catalyst resistance Rα, and the cathode catalyst resistance Rβ of each of the electrochemical cells 5 as the estimation results in the diagnosis during use of the electrochemical module 2.

In an example, the determination processing is performed using only the diagnosis result in the latest one diagnosis. In this case, for the estimated parameters including the module catalyst resistance Rm2 and the cell catalyst resistance Rc2, the estimated value in the latest one diagnosis is used in the following determination processing. In another example, the determination processing is performed using the diagnosis results in a plurality of times of diagnosis including the latest one diagnosis. In this case, for the estimated parameters including the module catalyst resistance Rm2 and the cell catalyst resistance Rc2, the average value or the weighted average value of the estimated values in a plurality of times of diagnosis is used in the following determination processing.

When the processing of the example of FIG. 5 is started, the processing circuit 11 or the like determines whether or not a sum Rm0 of the module membrane resistance Rm1 and the module catalyst resistance Rm2 of the electrochemical module (target electrochemical module) 2 is equal to or larger than a threshold Rm0th (S111). When the sum Rm0 is smaller than the threshold Rm0th (S111-No), the processing circuit 11 or the like determines that the use of the electrochemical module 2 for a predetermined use or in a predetermined device is continued (S112). On the other hand, when the sum Rm0 is equal to or larger than the threshold Rm0th (S111-Yes), the processing circuit 11 or the like determines that the use of the electrochemical module 2 for a predetermined use or in a predetermined device is ended (S113). Then, the electrochemical module 2 is determined as the used electrochemical module 2 whose use for a predetermined use or in a predetermined device has been ended.

In an example, instead of the processing of S111, the processing circuit 11 or the like determines whether the change amount (increase amount) of the sum Rm0 from a predetermined time point such as the start of use of the electrochemical module 2 is equal to or larger than a threshold. When the change amount of the sum Rm0 is smaller than the threshold, the processing circuit 11 or the like determines that the use of the electrochemical module 2 is continued. On the other hand, when the change amount of the sum Rm0 is equal to or larger than the threshold, the processing circuit 11 or the like determines that the use of the electrochemical module 2 is ended. As described above, in the processing of S111 to S113 and the like, whether or not to continue the use of the electrochemical module 2 is determined based on the sum Rm0 of the module membrane resistance Rm1 and the module catalyst resistance Rm2 of the electrochemical module 2.

When ending the use of the electrochemical module 2, the processing circuit 11 or the like determines whether or not the module catalyst resistance Rm2 of the electrochemical module 2 is equal to or greater than a threshold Rm2th (S114). When the module catalyst resistance Rm2 is smaller than the threshold Rm2th (S114-No), the processing circuit 11 or the like determines that separation of the plurality of electrochemical cells 5 constituting the electrochemical module 2 from each other is unnecessary. The processing circuit 11 or the like determines that the electrochemical module 2 can be regenerated without separating the plurality of electrochemical cells 5 from each other (S115). On the other hand, when the module catalyst resistance Rm2 is equal to or greater than the threshold Rm2th (S114-Yes), the processing circuit 11 determines that the plurality of electrochemical cells 5 need to be separated from each other (S116). The processing circuit 11 or the like determines that the electrochemical module 2 cannot be regenerated in a state where the plurality of electrochemical cells 5 are not separated from each other.

In an example, instead of the processing of S114, the processing circuit 11 or the like determines whether the change amount (increase amount) of the module catalyst resistance Rm2 from a predetermined time point such as the start of use of the electrochemical module 2 is equal to or larger than a threshold. When the change amount of the module catalyst resistance Rm2 is smaller than the threshold, the processing circuit 11 or the like determines that the plurality of electrochemical cells 5 need not to be separated from each other. On the other hand, when the change amount of the module catalyst resistance Rm2 is equal to or greater than the threshold, the processing circuit 11 or the like determines that the plurality of electrochemical cells 5 need to be separated from each other. As described above, in the processing of S114 to S116 and the like, whether or not the electrochemical module 2 can be regenerated without separating the plurality of electrochemical cells 5 from each other is determined based on the module catalyst resistance Rm2 of the electrochemical module 2.

When it is determined that the electrochemical module 2 cannot be regenerated in a state in which the plurality of electrochemical cells 5 are not separated from each other, the processing circuit 11 or the like executes determination processing on a single electrochemical cell 5 (S117). The determination processing in S117 is performed with any one of the electrochemical cells 5 constituting the electrochemical module 2 as a target electrochemical cell to be processed. When the determination processing in S117 is ended for an electrochemical cell 5, the processing circuit 11 or the like determines whether or not the determination processing in S117 is completed for all the electrochemical cells 5 constituting the electrochemical module 2 (S118).

If the determination processing has not been ended for one or more of the electrochemical cells 5 (S118-No), the processing returns to S117. The processing circuit 11 or the like performs the determination processing in S117 on any one of the electrochemical cells 5 on which the determination processing has not been performed. Therefore, when it is determined that the plurality of electrochemical cells 5 need to be separated from each other, the processing circuit 11 or the like performs the determination processing in S117 on each of all the electrochemical cells 5 constituting the electrochemical module 2.

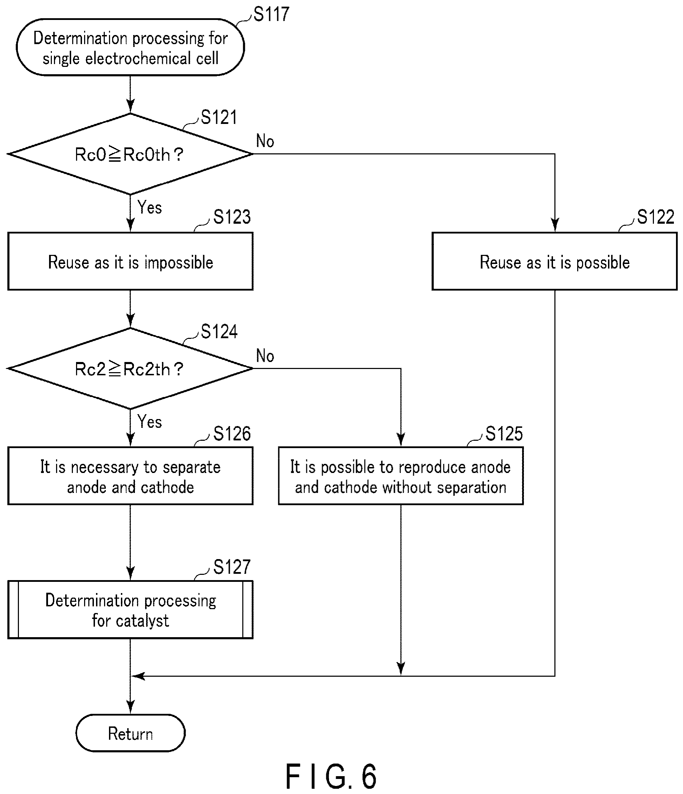

FIG. 6 is a flowchart illustrating an example of the determination processing on the single electrochemical cell 5, which is the processing in S117 of FIG. 5. In the processing in the example of FIG. 6, any one of the electrochemical cells 5 constituting the electrochemical module 2 is set as a target electrochemical cell to be processed.

When the processing of the example of FIG. 6 is started, the processing circuit 11 or the like determines whether or not a sum Rc0 of the cell membrane resistance Rc1 and the cell catalyst resistance Rc2 of the electrochemical cell (target electrochemical cell) 5 is equal to or more than a threshold Rc0th (S121). If the sum Rc0 is smaller than the threshold Rc0th (S121-No), the processing circuit 11 or the like determines that the electrochemical cell 5 can be reused as it is (S122). On the other hand, if the sum Rc0 is equal to or larger than the threshold Rc0th (S121-Yes), the processing circuit 11 or the like determines that the electrochemical cell 5 cannot be reused as it is (S123).

In an example, instead of the processing of S121, the processing circuit 11 or the like determines whether the change amount (increase amount) of the sum Rc0 from a predetermined time point such as the start of use of the electrochemical module 2 is equal to or larger than a threshold. When the change amount of the sum Rc0 is smaller than the threshold, the processing circuit 11 or the like determines that the electrochemical cell 5 can be reused as it is. On the other hand, when the change amount of the sum Rc0 is equal to or larger than the threshold, the processing circuit 11 or the like determines that the electrochemical cell 5 cannot be reused as it is. As described above, in the processing of S121 to S123 and the like, whether or not the electrochemical cell 5 can be reused as it is is determined based on the sum Rc0 of the cell membrane resistance Rc1 and the cell catalyst resistance Rc2 of the electrochemical cell (target electrochemical cell) 5.

When determining that the electrochemical cell 5 cannot be reused as it is, the processing circuit 11 or the like determines whether or not the cell catalyst resistance Rc2 of the electrochemical cell 5 is equal to or greater than a threshold Rc2th (S124). If the cell catalyst resistance Rc2 is smaller than the threshold Rc2th (S124-No), the processing circuit 11 or the like determines that separation of the anode and the cathode is unnecessary in the electrochemical cell 5. Then, the processing circuit 11 or the like determines that the electrochemical cell 5 can be regenerated without separating the anode and the cathode (S125). Therefore, it is determined that the electrochemical cell 5 can be regenerated without separating the catalyst contained in at least one of the anode and the cathode.

On the other hand, if the cell catalyst resistance Rc2 is equal to or greater than the threshold Rc2th (S124-Yes), the processing circuit 11 or the like determines that it is necessary to separate the anode and the cathode in the electrochemical cell 5 (S126). Then, the processing circuit 11 or the like determines that the electrochemical cell 5 cannot be regenerated in a state where the anode and the cathode are not separated. Therefore, it is determined that the electrochemical cell 5 cannot be regenerated in a state where the catalyst contained in at least one of the anode and the cathode is not separated.

In an example, instead of the processing of S124, the processing circuit 11 or the like determines whether the change amount (increase amount) of the cell catalyst resistance Rc2 from a predetermined time point such as the start of use of the electrochemical module 2 is equal to or larger than a threshold. When the change amount of the cell catalyst resistance Rc2 is smaller than the threshold, the processing circuit 11 or the like determines that separation of the anode and the cathode is unnecessary in the electrochemical cell (target electrochemical cell) 5. On the other hand, when the change amount of the cell catalyst resistance Rc2 is equal to or larger than the threshold, the processing circuit 11 or the like determines that it is necessary to separate the anode and the cathode in the electrochemical cell 5. As described above, in the processing of S124 to S126 and the like, whether or not the electrochemical cell 5 can be regenerated without separating the anode and the cathode is determined based on the cell catalyst resistance Rc2 of the electrochemical cell (target electrochemical cell) 5. That is, whether or not the electrochemical cell 5 can be regenerated without separating the catalyst from the electrode group is determined based on the cell catalyst resistance Rc2.

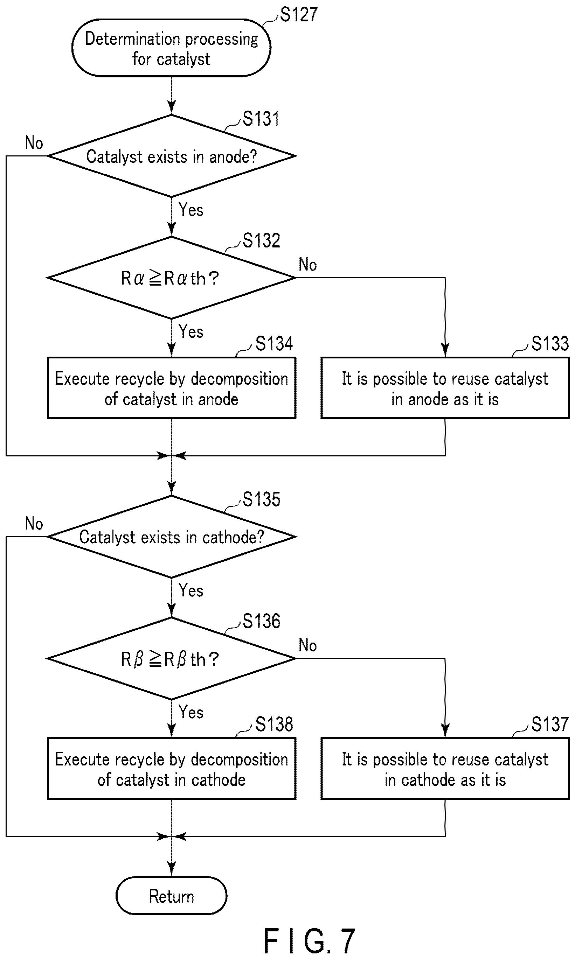

When it is determined that the electrochemical cell 5 cannot be regenerated in a state where the anode and the cathode are not separated, the processing circuit 11 or the like executes determination processing for the catalyst (S127). The determination processing in S127 is performed on the electrochemical cell 5 determined not to be able to be regenerated in a state where the catalyst is not separated as a processing target. FIG. 7 is a flowchart illustrating an example of the determination processing for the catalyst, which is the processing of S127 of FIG. 6.

When the processing of the example of FIG. 7 is started, the processing circuit 11 or the like determines whether or not a catalyst is present in the anode of the electrochemical cell (target electrochemical cell) 5 (S131). In an example, information about the anode of the electrochemical cell 5 is stored in the storage medium 12, and the processing circuit 11 or the like performs the determination in S131 based on the stored information about the anode. If the catalyst is present in the anode (S131-Yes), the processing circuit 11 or the like determines whether or not the anode catalyst resistance Rα is equal to or greater than a threshold Rαth (S132).

If the anode catalyst resistance Rα is smaller than the threshold Rαth (S132-No), the processing circuit 11 or the like determines that decomposition of the catalyst of anode is unnecessary. That is, the processing circuit 11 or the like determines that the catalyst of anode can be reused as it is (S133). On the other hand, if the anode catalyst resistance Rα is equal to or greater than threshold Rαth (S132-Yes), the processing circuit 11 or the like needs to decompose the catalyst of anode, and determines to execute recycling by decomposition of the catalyst of anode (S134). That is, it is determined that the catalyst of anode cannot be reused as it is.

In an example, instead of the processing of S132, the processing circuit 11 or the like determines whether the change amount (increase amount) of the anode catalyst resistance Rα from a predetermined time point such as the start of use of the electrochemical module 2 is equal to or larger than a threshold. Then, when the change amount of the anode catalyst resistance Rα is smaller than the threshold, the processing circuit 11 or the like determines that the decomposition of the catalyst of anode is unnecessary. On the other hand, when the change amount of the anode catalyst resistance Rα is equal to or larger than the threshold, the processing circuit 11 or the like determines that it is necessary to decompose the catalyst of anode. As described above, in the processing of S132 to S134 and the like, whether or not the catalyst of anode can be reused as it is is determined based on the anode catalyst resistance Rα of the electrochemical cell (target electrochemical cell) 5.

When the processing of S133 or the processing of S134 is performed, the processing proceeds to S135. If there is no catalyst in the anode of electrochemical cell 5 (S131-No), the processing proceeds to S135 without performing the processing of S132 to S134.

Then, the processing circuit 11 or the like determines whether or not a catalyst is present at the cathode of the electrochemical cell (target electrochemical cell) 5 (S135). In an example, information about the cathode of the electrochemical cell 5 is stored in the storage medium 12, and the processing circuit 11 or the like performs the determination in S135 based on the stored information about the cathode. If the catalyst is present in the cathode (S135-Yes), the processing circuit 11 or the like determines whether or not the cathode catalyst resistance Rβ is equal to or greater than the threshold Rβth (S136).

If the cathode catalyst resistance Rβ is smaller than the threshold Rβth (S136-No), the processing circuit 11 or the like determines that the decomposition of the catalyst of cathode is unnecessary. That is, the processing circuit 11 or the like determines that the catalyst of cathode can be reused as it is (S137). On the other hand, when the cathode catalyst resistance Rβ is equal to or larger than the threshold Rβth (S136-Yes), the processing circuit 11 or the like determines that it is necessary to decompose the catalyst of cathode, and recycling by decomposition of the catalyst of cathode is executed (S138). That is, it is determined that the catalyst of cathode cannot be reused as it is.

In an example, instead of the processing of S136, the processing circuit 11 or the like determines whether the change amount (increase amount) of the cathode catalyst resistance Rβ from a predetermined time point such as the start of use of the electrochemical module 2 is equal to or larger than a threshold. Then, when the change amount of the cathode catalyst resistance Rβ is smaller than the threshold, the processing circuit 11 or the like determines that decomposition of the catalyst of cathode is unnecessary. On the other hand, when the change amount of the cathode catalyst resistance Rβ is equal to or larger than the threshold, the processing circuit 11 or the like determines that it is necessary to decompose the catalyst of cathode. As described above, in the processing of S136 to S138 and the like, whether or not the catalyst of cathode can be reused as it is is determined based on the cathode catalyst resistance Rβ of the electrochemical cell (target electrochemical cell) 5.

When the processing of S137 or the processing of S138 is performed, the determination processing for the catalyst ends. If there is no catalyst in the cathode of the electrochemical cell 5 (S135-No), the processing of S136 to S138 is not performed, and the determination processing for the catalyst ends.

Here, in the electrochemical cell 5, as described above, at least one of the anode and the cathode includes a catalyst. Therefore, when the determination processing for the catalyst is performed on an electrochemical cell 5, at least one of the processing of S132 and the processing of S136 is performed. That is, the processing circuit 11 or the like performs at least one of processing of determining whether or not the catalyst of anode of the electrochemical cell 5 can be reused as it is based on the anode catalyst resistance Rα and processing of determining whether or not the catalyst of cathode of the electrochemical cell 5 can be reused as it is based on the cathode catalyst resistance Rβ.

In an example, when it is determined that the electrochemical cell 5 cannot be regenerated in a state where the anode and the cathode are not separated in the processing of FIG. 6, the determination processing of S127 is not performed. In this example, when it is determined that the electrochemical cell 5 cannot be regenerated in a state where the anode and the cathode are not separated, the processing circuit 11 or the like determines that it is necessary to decompose the catalyst included in the electrochemical cell 5. That is, it is determined that the catalyst needs to be decomposed regardless of whether the catalyst is a catalyst of the anode or the cathode.

In the determination processing in the example of FIG. 5, when it is determined that the plurality of electrochemical cells 5 need to be separated from each other, the processing circuit 11 or the like performs the determination processing in S117 on each of all the electrochemical cells 5. Therefore, when it is determined that the plurality of electrochemical cells 5 need to be separated from each other, the processing circuit 11 or the like determines whether or not each of the plurality of electrochemical cells 5 constituting the electrochemical module 2 can be reused as it is based on a sum Rc0 of the cell membrane resistance Rc1 and the cell catalyst resistance Rc2. When the electrochemical cell 5 determined to be unreusable as it is is present, the processing circuit 11 or the like determines whether or not the electrochemical cell 5 determined to be unreusable as it is can be regenerated without separating the anode and the cathode based on the cell catalyst resistance Rc2.

In the present embodiment, when the separation of the plurality of electrochemical cells 5 from each other is determined to be unnecessary by the processing in S115 in the example of FIG. 5, regeneration of the electrochemical module 2 is performed in a state where the plurality of electrochemical cells 5 are not separated from each other. The regeneration of the electrochemical module 2 without separating the electrochemical cells 5 from each other is also referred to as "refurbishment of the electrochemical module 2". In the refurbishment of the electrochemical module 2, the electrochemical module 2 is regenerated without regeneration of the single electrochemical cell 5 described later.

In the refurbishment of the electrochemical module 2, for example, the electrochemical module 2 is cleaned with an acidic solution in a state where the plurality of electrochemical cells 5 are not separated from each other. Thus, in each of the electrochemical cells 5 constituting the electrochemical module 2, metal ions and the like adhering to the membrane are removed. In an example, the electrochemical module 2 is regenerated by exchanging positions between the electrochemical cells 5 constituting the electrochemical module 2. However, replacement with an electrochemical cell different from the electrochemical cell 5 constituting the electrochemical module 2 or the like does not correspond to refurbishment of the electrochemical module 2 because the electrochemical cell 5 to be replaced with a new electrochemical cell needs to be separated.

When it is determined that the separation of the anode and the cathode is unnecessary in the electrochemical cell 5 by the processing of S125 in the example of FIG. 6, the electrochemical cell 5 is regenerated in a state where the anode and the cathode are not separated. The regeneration of the electrochemical cell 5 without separating the anode and the cathode is also referred to as "refurbishment of the electrochemical cell 5". In the refurbishment of the electrochemical cell 5, the electrochemical cell 5 is regenerated without separating the catalyst from the electrode group formed of the anode, the cathode and the membrane. In the refurbishment of the electrochemical cell 5, for example, the electrochemical cell 5 is cleaned with an acidic solution in a state where the catalyst is not separated. Thus, in the electrochemical cell 5, metal ions and the like adhering to the membrane are removed.

Further, when it is determined that at least one of the anode and the cathode needs to be decomposed by the processing of S134 and the processing of S138 in the example ofFIG. 7, processing of decomposing the corresponding catalyst (corresponding one or both of the anode and the cathode) is performed. At this time, the target catalyst is decomposed using one or both of dry refining and wet refining. A target catalyst is decomposed to recover an element contained in the catalyst or a compound or a mixture of elements. Then, the catalyst is regenerated by synthesizing the recovered element or a compound or mixture of elements. Incidentally, the processing of recovering elements and the like by decomposition of the catalyst and synthesizing the recovered elements and the like to regenerate the catalyst is also simply referred to as "recycling".

As described above, in the present embodiment, whether or not electrochemical cell 5 to be processed can be reused as it is is determined based on the sum Rc0 of the cell membrane resistance Rc1 and the cell catalyst resistance Rc2. Then, based on the cell catalyst resistance Rc2, it is determined whether or not the electrochemical cell 5 can be regenerated without separating the anode and the cathode. Therefore, when the electrochemical cell 5 can be regenerated by the regeneration processing in a state where the catalyst is not separated from the electrode group, the electrochemical cell 5 can be regenerated and reused without separating the anode and the cathode. Accordingly, the electrochemical cell 5 can be effectively reused in accordance with the state of the electrochemical cell 5, and the electrochemical cell 5 can be reused in a state of high added value.

In the electrochemical cell 5 in which both the anode and the cathode include the catalyst, even when the cell catalyst resistance Rc2 of the electrochemical cell 5 is high, the degree of deterioration of the catalyst may be large in one of the anode and the cathode, and the degree of deterioration of the catalyst may be small in the other of the anode and the cathode. In an example of the present embodiment, when it is determined that the electrochemical cell 5 cannot be regenerated in a state where the anode and the cathode are not separated, at least one of the determination based on the anode catalyst resistance Rα as to whether or not the catalyst of the anode needs to be decomposed and the determination based on the cathode catalyst resistance Rβ as to whether or not the catalyst of the cathode needs to be decomposed is performed. For this reason, when the degree of deterioration of the catalyst is large only in one of the anode and the cathode, one of the anode catalyst and the cathode catalyst having a small degree of deterioration can be reused without being decomposed. Therefore, the catalyst of the electrochemical cell 5 can be effectively reused in accordance with the state of the electrochemical cell 5, and the catalyst can be reused in a state of high added value.

In the present embodiment, whether or not the electrochemical module 2 including the plurality of electrochemical cells 5 can be regenerated without separating the plurality of electrochemical cells 5 from each other is determined based on the module catalyst resistance Rm2. Therefore, when the electrochemical module 2 can be regenerated by the regeneration processing in a state in which the electrochemical cells 5 are not separated from each other, the electrochemical module 2 can be regenerated and reused without performing the regeneration processing of the single electrochemical cell 5. Accordingly, the electrochemical module 2 can be effectively reused in accordance with the state of the electrochemical cell 5 constituting the electrochemical module 2, and the electrochemical module 2 can be reused in a state of high added value.

In the present embodiment, for each of the electrochemical cells 5, parameters used for the above-described determination, such as cell membrane resistance Rc1 and cell catalyst resistance Rc2, are estimated based on a measurement result of a frequency characteristic of impedance of the electrochemical cell 5. For this reason, for each of the electrochemical cells 5, determination regarding reuse, recycling, and the like is performed based on parameters appropriately estimated in accordance with the internal state. For the electrochemical module 2, the parameter used for the determination such as module catalyst resistance Rm2 is estimated based on the measurement result of the frequency characteristic of the impedance of the electrochemical module 2. For this reason, for the electrochemical module 2, determination regarding reuse, recycling, and the like is performed based on parameters appropriately estimated in accordance with the internal state.

In addition, in the present embodiment, in each diagnosis performed periodically at the time of use of the electrochemical module 2, the frequency characteristic of impedance is measured for the electrochemical module 2 and each of the electrochemical cells 5, and the above-described parameters used for determination such as the cell catalyst resistance Rc2, the module catalyst resistance Rm2, and the like are estimated. Therefore, in the determination processing, the determination can be performed using the parameter estimated in the diagnosis, and the trouble or the like of newly acquiring the parameter used for the determination is reduced.

In the determination processing, instead of the determination using the value of the parameter such as the cell catalyst resistance Rc2, the accuracy of the determination is improved by performing the determination based on the change amount (increase amount) of the parameter from a predetermined time point such as the start of use of the electrochemical module 2. As a result, for example, reuse and recycling of electrochemical cell 5 are more appropriately determined. In addition, in the determination processing, the accuracy of determination is improved by performing determination using not the estimation result of the parameter such as the cell catalyst resistance Rc2 in one diagnosis but the estimation result of the parameter in a plurality of times of diagnosis performed in different periods relative to each other. As a result, for example, reuse and recycling of electrochemical cell 5 are more appropriately determined.

In addition, in the processing system 1, for example, a temperature adjustment apparatus for adjusting the environmental temperature may be provided around the electrochemical module in a state in which the environmental temperature of the environment in which the electrochemical module 2 is disposed is included in the above-described prescribed temperature range. Any of an air cooling apparatus and a liquid cooling apparatus capable of lowering the environmental temperature of the electrochemical module 2 and a heater capable of raising the environmental temperature may be installed around the electrochemical module 2.

In at least one of the above embodiments and examples, whether or not the target electrochemical cell can be reused as it is is determined based on the sum of the cell membrane resistance caused by the membrane and the cell catalyst resistance caused by the catalyst for the target electrochemical cell. When it is determined that the target electrochemical cell cannot be reused as it is, whether or not the target electrochemical cell can be regenerated without separating the anode and the cathode is determined based on the cell catalyst resistance. It is possible to provide a processing method, a processing apparatus, and a processing program related to an electrochemical cell that enable effective reuse of the electrochemical cell in accordance with a state of the electrochemical cell in determination of reuse and recycling of the electrochemical cell.

Although some embodiments of the invention have been described, these embodiments are for purposes of illustration and are not intended to limit the scope of the invention. These novel embodiments may be implemented in various other forms and may be omitted, substituted, or changed in various ways without departing from the gist of the invention. These embodiments and modifications thereof are included in the scope and gist of the invention and are included in the invention disclosed in the claims and the equivalent scope thereof.

## Claims

1. A processing method related to an electrochemical cell in which at least one of an anode and a cathode includes a catalyst and an electrochemical reaction occurs by an input of power or power generated by an electrochemical reaction is output, the processing method comprising:
determining, for a target electrochemical cell, whether or not the target electrochemical cell can be reused as it is based on a sum of a cell membrane resistance caused by a membrane and a cell catalyst resistance caused by a catalyst; and
determining whether or not the target electrochemical cell can be regenerated without separating the anode and the cathode based on the cell catalyst resistance when it is determined that the target electrochemical cell cannot be reused as it is.

2. The processing method according to claim 1, further comprising performing at least one of:
when it is determined that the target electrochemical cell cannot be regenerated in a state where the anode and the cathode are not separated,
determining whether or not the catalyst of the anode of the target electrochemical cell can be reused as it is based on an anode catalyst resistance due to the catalyst of the anode; and
determining whether or not the catalyst of the cathode of the target electrochemical cell can be reused as it is based on a cathode catalyst resistance caused by the catalyst of the cathode.

3. The processing method according to claim 2, further comprising recovering an element contained in the catalyst or a compound or a mixture of the elements by decomposing the catalyst determined to be unreusable as it is in the target electrochemical cell.

4. The processing method according to any one of claims 1 to 3, further comprising:
determining, for a target electrochemical module to which a plurality of the electrochemical cells are electrically connected, whether or not the target electrochemical module can be regenerated without separating the plurality of the electrochemical cells from each other based on a module catalyst resistance caused by a catalyst;
determining whether or not each of a plurality of the electrochemical cells constituting the target electrochemical module can be reused as it is based on the sum of the cell membrane resistance and the cell catalyst resistance when it is determined that the target electrochemical module cannot be regenerated in a state where the plurality of the electrochemical cells are not separated from each other; and
determining, when there is the electrochemical cell determined not to be able to be reused as it is, whether or not the electrochemical cell determined not to be able to be reused as it is can be regenerated without separating the anode and the cathode based on the cell catalyst resistance.

5. The processing method according to claim 4, further comprising
diagnosing the target electrochemical module and each of the plurality of electrochemical cells constituting the target electrochemical module by estimating the module catalyst resistance of the target electrochemical module and the cell membrane resistance and the cell catalyst resistance of each of the plurality of electrochemical cells constituting the target electrochemical module when the target electrochemical module is used, wherein
in the determination for the target electrochemical module, the determination is made using the estimation result of the module catalyst resistance in the diagnosis at the time of use, and
in the determination for each of the plurality of electrochemical cells constituting the target electrochemical module, the determination is made using the estimation results of the cell membrane resistance and the cell catalyst resistance in the diagnosis at the time of use.

6. The processing method according to any one of claims 1 to 3, further comprising
diagnosing the target electrochemical cell by estimating the cell membrane resistance and the cell catalyst resistance of the target electrochemical cell at the time of use of the target electrochemical cell, wherein
in the determination for the target electrochemical cell, the determination is made using the estimation results of the cell membrane resistance and the cell catalyst resistance in the diagnosis at the time of use.

7. The processing method according to any one of claims 1 to 3, further comprising performing regeneration in a state where the anode and the cathode are not separated with respect to the target electrochemical cell determined to be able to be regenerated without separating the anode and the cathode.

8. The processing method according to any one of claims 1 to 3, wherein in the determination for the target electrochemical cell, the determination is made using any one of a water electrolysis cell that electrolyzes water by input of the power, a P2C cell that electrolyzes carbon dioxide by input of the power, and a fuel battery cell that generates the power output by supply of oxygen and fuel, as the target electrochemical cell.

9. A processing apparatus related to an electrochemical cell in which at least one of an anode and a cathode includes a catalyst and an electrochemical reaction occurs by an input of power or power generated by an electrochemical reaction is output, the processing apparatus comprising a processor configured to:
determine, for a target electrochemical cell, whether or not the target electrochemical cell can be reused as it is based on a sum of a cell membrane resistance caused by a membrane and a cell catalyst resistance caused by a catalyst; and
determine whether or not the target electrochemical cell can be regenerated without separating the anode and the cathode based on the cell catalyst resistance when it is determined that the target electrochemical cell cannot be reused as it is.

10. A processing program related to an electrochemical cell in which at least one of an anode and a cathode includes a catalyst and an electrochemical reaction occurs by input of power or power generated by an electrochemical reaction is output, the processing program causing a computer to:
determine, for a target electrochemical cell, whether or not the target electrochemical cell can be reused as it is based on a sum of a cell membrane resistance caused by a membrane and a cell catalyst resistance caused by a catalyst; and
determine whether or not the target electrochemical cell can be regenerated without separating the anode and the cathode based on the cell catalyst resistance when it is determined that the target electrochemical cell cannot be reused as it is.
